# EUROPÄISCHE PATENTSCHRIFT

(11) **EP 1 105 807 B1**
(45) Veröffentlichungstag und Bekanntmachung des Hinweises auf die Patenterteilung: **12.06.2002**
(21) Anmeldenummer: 99952427.5
(22) Anmeldetag: 17.08.1999
(51) Int. Cl.: G06F 13/40

(54) **VERFAHREN ZUR KONVERTIERUNG UNTERSCHIEDLICHER DATENFORMATE**
METHOD FOR CONVERTING DIFFERENT DATA FORMATS
PROCEDE DE CONVERSION DE FORMATS DE DONNEES DIFFERENTS

(30) Priorität: 17.08.1998 DE 19837215
(43) Veröffentlichungstag der Anmeldung: 13.06.2001
(73) Patentinhaber: SIEMENS AKTIENGESELLSCHAFT, 80333 München (DE)
(72) Erfinder: KLEBER, Ulrich, D-80686 München (DE); BUCHELT, Andreas, D-85748 Garching (DE); HUBER, Rudolf, D-81673 München (DE); MAYER, Walter, D-83026 Rosenheim (DE)
(86) Internationale Anmeldenummer: DE9902575
(87) Internationale Veröffentlichungsnummer: WO0011560

(56) Entgegenhaltungen:
- EP-A- 0 764 899
- US-A- 5 524 244

## Beschreibung

Die Erfindung betrifft ein Verfahren gemäß dem Oberbegriff von Patentanspruch 1.

Zeitgemäße Kommunikationssysteme sind als Multiprozessorsysteme ausgebildet. Dies bedeutet, daß die Steuerung der systeminternen Vorgänge von einer Vielzahl von Prozessoren durchgeführt wird. In der Regel sind derartige Kommunikationssysteme als heterogene Systeme ausgebildet. Dies bedeutet, daß Prozessoren verschiedener Hersteller im Kommunikationssystem eingesetzt werden. Damit arbeiten aber diese Prozessoren auch nach herstellerspezifischen Standards. So werden beispielsweise Daten der einzelnen Prozessoren in unterschiedlichen Formaten im jeweils zugeordneten Speicher abgelegt. Dies bedeutet keine Einschränkung des Betriebes, solange Programme, die in der Regel während ihres Ablaufes jeweils einem Prozessor zugeodnet sind, diese Daten aus dem betreffenden Speicher auslesen, verarbeiten und wieder in den Speicher einschreiben, da in diesem Fall stets dasselbe Datenformat verwendet wird. Probleme entstehen meist dann, wenn Nachrichten oder Daten zwischen Prozessoren bzw. auf diesen ablaufenden Programmen ausgetauscht werden, da hier gegebenenfalls diese Daten an die unterschiedlichen Datenformate angepaßt werden müssen.

So werden beispielsweise Daten, die auf Prozessoren der Motorola-Familie verarbeitet werden, von diesen in einem LSB_HI-Format (Least Significant Byte at Highest Address), auch Big-Endian-Format genannt, abgelegt. Im Gegensatz dazu werden Daten, die auf Prozessoren der Intel-Familie verarbeitet werden, von diesen in einem LSB_LO-Format (Least Significant Byte At Lowest Address), auch Little-Endian-Format genannt, abgelegt. Damit müssen nun im Falle eines Datenaustausches zwischen diesen beiden Prozessortypen die Daten in entsprechender Weise konvertiert werden.

Zur Lösung derartiger Probleme hinsichtlich unterschiedlicher Datenformate bei der Prozeßkommunikation in heterogenen Systemen wird beim Stand der Technik ein spezielles Transferformat für den Austausch von Nachrichten und Daten festgelegt (z.B. ASN.1). Dies bedeutet, daß generell vor jedem Nachrichtenaustausch das prozessoreigene Format in ein vorher festgelegtes, lediglich zum Zwecke des Austausches von Nachrichten verwendetetes Übertragungsformat umgewandelt wird. Ist die Nachricht beim Zielprozessor angekommen, wird das Ubertragungsformat in das dort verwendete prozessoreigene Format zurückverwandelt.

Problematisch an einer derartigen Vorgehensweise ist, daß die durch den Austausch von Nachrichten miteinander kommunizierenden Programme jeweils selbst für die Konvertierung der auszutauschenden Nachrichten zwischen prozessoreigenem Datenformat und Transferformat verantwortlich sind. Damit müssen aber alle benötigten Format-Konvertierungen vom Entwickler der Applikationssoftware bei der Codierung des jeweiligen Programmes explizit programmiert werden. Darüberhinaus sind bei Verwendung dieses Transferformates insgesamt 2 Konvertierungen vorzunehmen, nämlich zum einen eine Konvertierung des Formates vom Quellenprozessor in das Transferformat, und von diesem wieder in das Format des Zielprozessors. Da das Transferformat von seiner Struktur her sehr umfangreich ist, wird damit die Dynamik des Systems beeinträchtigt. Letztlich besteht bei strikter Anwendung dieser Technik das Problem, daß auch beim Versenden von Nachrichten zwischen Programmen, die auf Prozessoren mit ein- und demselben Datenformats ablaufen, die Konvertierungen vom prozessoreigenen Datenformat des Quellenprozessors in das Übertragungsformat und aus dem Übertragungsformat in das prozessoreigene Datenformat des Zielprozessors erfolgen. Dadurch wird die Dynamik des Systems weiter beeinträchtigt.

Weiterhin wird in der deutschen Patentanmeldung 19535306.4 bzw. der zugehörigen europäischen Patentanmeldung EP 0 764 899 ein Verfahren zum Konvertieren sich unterscheidender Datenformate beschrieben, mit dem Nachrichten zwischen Prozessoren ausgetauscht werden, auf denen jeweils unterschiedliche Datenformate verwendet werden. Hierzu wird bereits während des Übersetzungsvorgangs der Quellprogramme automatisch die für die Konvertierung der Daten zwischen den Formaten nötigen Prozeduren bereitgestellt. Dies wird erreicht, indem das Übersetzungsprogramm nach Maßgabe der in den Quellprogrammen verwendeten Datentypen Konvertierungsprozeduren während des Übersetzungslaufes erzeugt, die dann während des späteren Ablaufs der übersetzten Programme vor dem Nachrichtenaustausch aufgerufen werden.

Problematisch an einer derartigern Vorgehensweise ist jedoch, daß umfangreiche Eingriffe im Compiler vorgenommen werden müssen. Hierzu sind detaillierte Kentnisse des Compilers nötig, was diesen Prozeß für den Anwender teuer und unwirtschaftlich macht.

Der Erfindung liegt die Aufgabe zugrunde, einen Weg aufzuzeigen, wie das Konvertieren von Datenformaten effizienter gesteuert werden kann, ohne die obengenannten Nachteile in Kauf nehmen zu müssen.

Vorteilhaft an der Erfindung ist insbesondere, daß vor Inbetriebnahme des Multiprozessorsystems ein Tool gesteuert wird, mittels dem nach Maßgabe der im Datenlayout abgelegten Definition der Schnittstelle eine Umwandlungsprozedur zur Umwandlung der Datenformate erzeugt wird, und daß in einem sich anschließenden Compilerlauf die Applikationsprogramme zusammen mit der Umwandlungsprozedur übersetzt und in einem Binder als Teil des Kommunikationshandlers eingebunden werden.Damit wird aus der Schnittstellendefinition vollautomatisch eine Konversionsmaschine erzeugt. Dadurch wird beim Austausch von Nachrichten die nötige Konvertierung automatisch durchgeführt.

Die Datenstrukturen können in ihrer ursprünglichen Form, das heißt ohne zusätzliche Formatinformation übertragen werden. Dadurch wird eine wesentlich höhere Performance erreicht. Hierzu ist es notwendig, daß sowohl dem sendenden als auch dem empfangenden Prozessor der Source-Code der Datenstrukturen bekannt ist.

Vorteilhafte Weiterbildungen der Erfindung sind in den Unteransprüchen angegeben.

Die Erfindung wird im folgenden anhand eines figürlich dargestellten Ausführungsbeispiels näher erläutert.

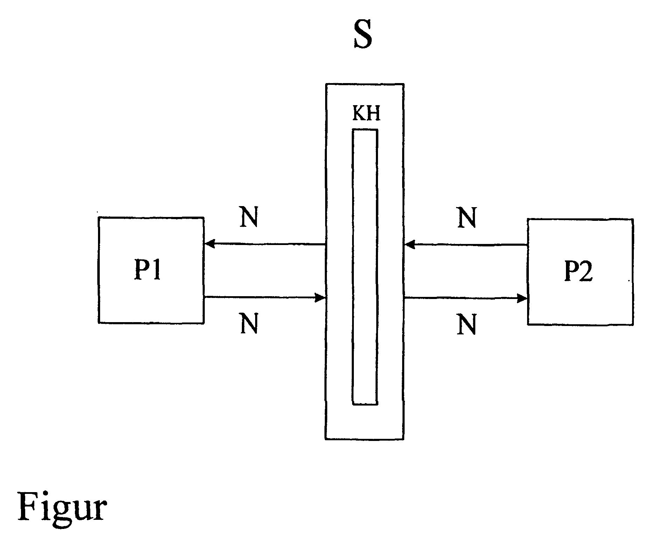

Demgemäß sind gemäß der Figur beispielhaft 2 Prozessoren P₁, P₂ einer Mehrzahl von Prozessoren eines Multiprozessorsystems aufgezeigt. Auf beiden Prozessoren gelangen jeweils Programme zum Ablauf, in denen Informationen und Daten mit unterschiedlichen Formaten geführt werden. Beispielhaft wird davon ausgegangen, daß auf dem Prozessor P₁ Daten im Big-Endian-Format geführt und verarbeitet werden. Im Gegensatz dazu sollen auf dem Prozessor P₂ Daten im Little-Endian-Format geführt werden. Damit müssen nun im Falle eines Datenaustausches zwischen diesen beiden Prozessortypen die auszutauschenden Daten in entsprechender Weise konvertiert werden. Die Konvertierung soll dabei vorzugsweise durch eine auf dem Prozessor P₁ ablaufende Umwandlungsprozedur UP erfolgen.

Zwischen den beiden Prozessoren P₁, P₂ ist weiterhin eine Schnittstelle S angeordnet.Diese stellt eine Softwareschnittstelle zwischen den auf beiden Prozessoren ablaufenden Programmen dar. Die Schnittstelle S ist bei Inbetriebnahme des Systems zu definieren, was über das entsprechende Datenlayout für diese Schnittstelle erfolgt. Im Datenlayout wird festgelegt, welche Programme während des Ablaufes miteinander kommunizieren sowie welche Datentypen in diesen Programmen geführt werden. Weiterhin ist in der Schnittstelle S ein Kommunikationshandler KH angeordnet, der den Nachrichtenaustausch zwischen beiden Prozessoren steuert.

Erfindungsgemäß wird nun ein Tool vorgesehen, das in Wirkverbindung mit einem Compiler steht. Hierbei soll es sich um einen handelsüblichen Compiler handeln. Bei der Produktion der Software für den Prozessor P₁ wird das Tool gestartet. Im Tool wird nach Maßgabe der dort abgelegten Definition im Datenlayout die Umwandlungsprozedur UP auf Source Code Ebene erzeugt. Dadurch wird die Umwandlungsprozedur UP unabhängig vom verwendeten Compiler und ist einfach zu implementieren. Im sich anschließenden Compilerlauf werden die Programme zusammen mit der Umwandlungsprozedur UP übersetzt und im Binder als Teil des Kommunikationshandlers KH eingebunden. Diese Aktionen sind vor der Inbetriebnahme des Multiprozessorsystems vorzunehmen.

Im folgenden soll während des laufenden Betriebes eine Nachricht N vom Prozessor P₁ zum Prozessor P₂ gesendet werden. Der Prozessor P₁ übergibt hierzu zunächst die Nachricht N dem Kommunikationshandler KH. Dort wird das Format der Nachricht N ermittelt und von der dort implementierten Umwandlungsprozedur UP in das Zielformat des Prozessors P₂ umgewandelt. Die Umwandlung erfolgt automatisch durch die Umwandlungsprozedur UP, ohne daß der Programmierer hierzu Vorsorge treffen muß. Nach der Umwandlung des Formats wird die Nachricht N dem Prozessor P₂ in dessen prozessoreigenem Format zugeführt.

Gemäß vorliegendem Ausführungsbeispiel wurde davon ausgegangen, daß die Umwandlung der Datenformaten im Prozessor P₁ erfolgt. Dies ist jedoch keine Einschränkung der Erfindung. Die Umwandlung kann ebenso im Prozessor P₂ erfolgen. Außerdem kann festgelegt werden, daß die Umwandlung ausschließlich beim Senden einer Nachricht N oder auschließlich beim Empfang vorzunehmen ist.

## Patentansprüche

1. Verfahren zur Konvertierung unterschiedlicher Datenformate in einem Multiprozessorsystem,
mit wenigstens 2 Prozessoren (P₁, P₂), auf denen jeweils Applikationsprogramme mit Daten unterschiedlicher Formate bearbeitet werden, und zwischen denen eine Schnittstelle (S) angeordnet ist und zwischen denen Nachrichten (N) unter der Steuerung eines Steuerprogrammes (KH) ausgetauscht werden, wobei die Nachricht (N) des sendenden Prozessors (P₁) in das Format des die Nachricht (N) empfangenden Prozessors (P₂) umgewandelt wird,
**dadurch gekennzeichnet,**
**daß** vor Inbetriebnahme des Multiprozessorsystems ein Tool gesteuert wird, mittels dem nach Maßgabe der Definition der Schnittstelle (S) eine Umwandlungsprozedur (UP) zur Umwandlung der Datenformate erzeugt wird, und
**daß** in einem sich anschließenden Compilerlauf die Applikationsprogramme zusammen mit der Umwandlungsprozedur (UP) übersetzt und unter zu Hilfenahme eines Bindeprogrammes in das Steuerprogramm (KH) eingebunden werden.

2. Verfahren nach Anspruch 1,
**dadurch gekennzeichnet,**
**daß** das Steuerprogramm (KH) integraler Bestandteil der Schnittstelle (S) ist.

3. Verfahren nach Anspruch 1, 2,
**dadurch gekennzeichnet,**
**daß** das Steuerprogramm (KH) als ein Programm ausgebildet ist, mittels dem der Nachrichtenaustausch zwischen den wenigstens 2 Prozessoren (P₁, P₂) gesteuert wird.

4. Verfahren nach Anspruch 1 bis 3,
**dadurch gekennzeichnet,**
**daß** die Definition der Schnittstelle (S) die Form eines Datenlayouts aufweist, in dem festgelegt ist, welche Programme während des Ablaufes miteinander kommunizieren sowie welche Datentypen in diesen Programmen geführt werden.

## Claims

1. Method for converting different data formats in a multiprocessor system,
having at least 2 processors (P₁, P₂) which each process application programs containing data in different formats and which have an interface (S) arranged between them and interchange messages (N) under the control of a control program (KH), with the message (N) from the sending processor (P₁) being converted into the format of the processor (P₂) receiving the message (N),
**characterized**
**in that**, before the multiprocessor system is started up, a tool is controlled which is used to produce, as stipulated by the definition of the interface (S), a conversion procedure (UP) for converting the data formats, and
**in that** a subsequent compiler pass translates the application programs together with the conversion procedure (UP) and incorporates them into the control program (KH) using a linking program.

2. Method according to Claim 1,
**characterized**
**in that** the control program (KH) is an integral element of the interface (S).

3. Method according to Claim 1, 2,
**characterized**
**in that** the control program (KH) is in the form of a program which is used to control the message interchange between the at least 2 processors (P₁, P₂).

4. Method according to Claim 1 to 3,
**characterized**
**in that** the definition of the interface (S) is in the form of a data layout stipulating which programs communicate with one another during execution and which data types these programs contain.

## Revendications

1. Procédé destiné à la conversion de formats de données différents dans un système multiprocesseur
ayant au moins 2 processeurs (P₁, P₂) sur chacun desquels sont traités des programmes d'application avec des données de formats différents et entre lesquels est disposée une interface (S) et entre lesquels des messages (N) sont échangés sous le contrôle d'un programme de commande (KH), le message (N) du processeur émetteur (P₁) étant converti dans le format du processeur (P₂), qui reçoit le message (N)
**caractérisé par le fait**
**que**, avant la mise en service du système multiprocesseur, on commande un outil ou tool, au moyen duquel, en fonction de la définition de l'interface (S), on génère une procédure de conversion (UP) destinée à la conversion des formats de données et
**que**, au cours d'un programme de compilateur qui lui succède, les programmes d'application sont traduits en commun avec la procédure de conversion (UP) et sont, en ayant recours à un programme de coordination, liés au programme de commande (KH).

2. Procédé selon la revendication 1
**caractérisé par le fait**
**que** le programme de commande (KH) fait partie intégrante de l'interface (S).

3. Procédé selon la revendication 1, 2
**caractérisé par le fait**
**que** le programme de commande (KH) est conçu comme programme au moyen duquel on contrôle l'échange de messages entre les au moins 2 processeurs (P₁, P₂).

4. Procédé selon la revendication 1 à 3
**caractérisé par le fait**
**que** la définition de l'interface (S) a la forme d'un plan de données dans lequel est fixé quels sont les programmes qui communiquent les uns avec les autres au cours de l'exploitation et quels types de données sont utilisés dans ces programmes.
